# EUROPEAN PATENT APPLICATION

(11) **EP 4 571 992 A1**
(43) Date of publication of application: **18.06.2025**
(21) Application number: 24861299.6
(22) Date of filing: 12.09.2024
(51) Int. Cl.: H01M 50/474

(54) **JELLY ROLL CENTER PIN AND BATTERY**

(30) Priority: 20.09.2023 CN 202322561513 U
(71) Applicant: Eve Energy Co., Ltd., Huizhou, Guangdong 516006 (CN)
(72) Inventor: LU, Tianjinao, Guangdong, 516006 (CN); ZHONG, Jiatai, Guangdong, 516006 (CN); AI, Siwei, Guangdong, 516006 (CN); LI, Yuefei, Guangdong, 516006 (CN); SONG, Pengyuan, Guangdong, 516006 (CN)
(74) Representative: Herrero & Asociados, S.L.
(86) International application number: PCT/CN2024/118444
(87) International publication number: WO 2025/060944

(57) **Abstract**

A winding core central pin is provided and includes a support rod (1) and a plurality of support ribs (2). The support rod is cylindrical; the plurality of support ribs are arranged along a circumferential direction of an outer wall of the support rod and have an equal inclination angle with respect to the outer wall of the support rod; the plurality of support ribs are configured to abut against an inner wall of a center hole (101) of a winding core; an avoidance space (3) is defined between every two adjacent support ribs of the plurality of support ribs to allow an electrolyte to flow through the avoidance space.

## Description

The present application claims the priority of the Chinese patent application No. 202322561513.7, filed on September 20, 2023, and contents of which are incorporated herein by its entireties.

### TECHNICAL FIELD

The present disclosure relates to the field of battery manufacturing, and in particular to a winding core central pin and a battery.

### BACKGROUND

A cylindrical battery usually includes a housing and a winding core arranged inside the housing. The winding core is formed by winding a positive electrode, a separator, and a negative electrode. However, an interior of the formed winding core is hollow. When the battery is being used cyclically, due to the hollow interior, the winding core may be expanded, such that the interior of the winding core may be collapsed and deformed. Therefore, the winding core may be fractured, affecting a service life of the battery.

### TECHNICAL PROBLEM

In the art, a cylindrical central pin may be arranged in the hollow interior of the winding core to support the winding core to prevent the winding core from collapsing and deforming inwardly. The above technical solution has following defects: the cylindrical central pin is attached to an inner wall of the hollow interior of the winding core, and in this way, flowing of an electrolyte is blocked, affecting absorption of the electrolyte by the winding core.

### TECHNICAL SOLUTION

In a first aspect, a winding core central pin is provided and includes a support rod and a plurality of support ribs. The support rod is cylindrical; the plurality of support ribs are arranged along a circumferential direction of an outer wall of the support rod and have an equal inclination angle with respect to the outer wall of the support rod; the plurality of support ribs are configured to abut against an inner wall of a center hole of a winding core; an avoidance space is defined between every two adjacent support ribs of the plurality of support ribs to allow an electrolyte to flow through the avoidance space.

In a second aspect, a battery is provided and includes a housing, a winding core arranged inside the housing, and the winding core central pin in the first aspect. The winding core central pin is inserted in the center hole of the winding core.

### TECHNICAL EFFECTS

According to the present disclosure, when the central pin is inserted into a center hole of the winding core, all support ribs uniformly are arranged along a circumferential direction and abut against an inner wall of the center hole of the winding core. Two adjacent support ribs and the inner wall of the center hole of the winding core cooperatively form a sector-shaped structure, which is similar to a triangle, such that the winding core is stably supported. In addition, an avoiding space formed between the two adjacent support ribs allows the electrolyte to flow through, obstruction of the flowing of electrolyte is reduced, enabling the winding core to be soaked in and to absorb the electrolyte. A contact area between the support ribs and the inner wall of the center hole of the winding core is smaller, such that a contact area between the inner wall of the center hole of the winding core and the electrolyte is increased. In this way, an influence, caused by the central pin, on the absorption of electrolyte by the winding core is reduced, such that performance of the winding core is ensured.

### BRIEF DESCRIPTION OF THE DRAWINGS

FIG. 1 is a perspective view of a winding core central pin according to some embodiments.
FIG. 2 is a cross-sectional view of the winding core central pin providing support according to some embodiments.
FIG. 3 is a cross-sectional view of the winding core central pin being contracted according to some embodiments.
FIG. 4 shows an enlarged view of a portion A shown in FIG. 2.

Reference numerals in the drawings:
100, winding core; 101, center hole;
1, support rod; 11, mounting cavity; 12, opening; 2, support rib; 3, avoiding space; 4, contraction structure;
41, connecting rod; 42, elastic member; 5, limiting member; 51, support portion; 511, limiting through slot; 6, first limiting portion; 7, second limiting portion; 8, air guiding slot; 9, through hole.

### DETAILED DESCRIPTION

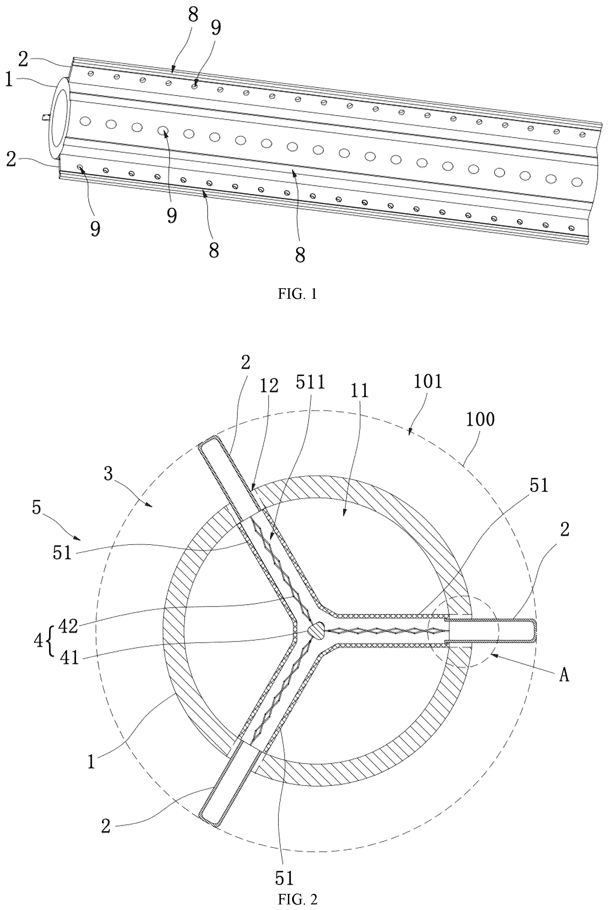

As shown in FIGS. 1 to 3, a winding core central pin is provided and includes a support rod 1 and a plurality of support ribs 2. The support rod 1 is cylindrical. The plurality of support ribs 2 are arranged along a circumferential direction of an outer wall of the support rod 1 and have an equal inclination angle with respect to the outer wall of the support rod 1. The plurality of support ribs 2 are configured to abut against an inner wall of a center hole 101 of the winding core 100 to support the winding core 100 to prevent the winding core 100 from collapsing and deformation inwardly. An avoidance space 3 is defined between every two adjacent support ribs 2 of the plurality of support ribs 2, allowing the electrolyte to flow through the avoidance space 3.

When the winding core central pin is inserted into the center hole 101 of the winding core 100, all the plurality of support ribs 2 are uniformly arranged along the circumferential direction and abut against the inner wall of the center hole 101 of the winding core 100. The every two adjacent support ribs 2 and the inner wall of the center hole 101 of the winding core 100 cooperatively form a substantially triangular-sector structure, such that the winding core 100 is stably supported. In addition, the avoidance space 3 defined between the every two adjacent support ribs 2 allows the electrolyte flow through. Obstruction against the flowing of the electrolyte is reduced, facilitating the winding core 100 to be soaked in and to absorb the electrolyte. Furthermore, when the battery is operating abnormally and needs to release a pressure, gas can be released from the avoidance space 3. A contact area between the plurality of support ribs 2 and the inner wall of the center hole 101 of the winding core 100 is smaller, such that a contact area between the inner wall of the center hole 101 of the winding core 100 and the electrolyte is increased. In this way, the influence, caused by the winding core central pin, on the absorption of the electrolyte by the winding core 100 is reduced optimally, ensuring performance of the winding core 100.

It should be noted that the number of the plurality of support ribs 2 may be two or more, and the number of the plurality of support ribs 2 is not specifically limited herein.

Further, as shown in FIG. 1, the outer wall of the support rod 1 and/or the plurality of support ribs 2 define a plurality of through holes 9 extending through the outer wall of the support rod 1 and/or the plurality of support ribs 2. In the present embodiment, the plurality of through holes 9 are defined in and extend through both the outer wall of the support rod 1 and the plurality of support ribs 2. The plurality of through holes 9 are communicated with all avoidance spaces 3 to allow the electrolyte to flow through all of the avoidance spaces 3 to facilitate the winding core 100 to be soaked in and to absorb the electrolyte.

In some embodiments, a diameter of each of the plurality of through holes 9 is in a range of 1mm to 3mm. For example, the diameter of the through hole 9 may be 1mm, 1.5mm, 2mm, 2.5mm, 3mm and so on. If the diameter of the through hole 9 is excessively large, strength of the winding core central pin is reduced. The excessively large diameter of the through hole 9 may affect a flowing efficiency of the electrolyte. The above configuration may improve the flowing efficiency of the electrolyte as much as possible without affecting the strength of the winding core central pin.

In some embodiments, as shown in FIG. 1, each of the outer wall of the support rod 1 and the outer wall of each support rib 2 defines an air guiding slot 8. The air guiding slot 8 extends along a length direction of the central pin. That is, a length direction of the support rod 1 is the same as a length direction of each support rib 2. The air guiding slot 8 on the support rod 1 extends along the length direction of the support rod 1 and extends through both ends of the support rod 1 in the length direction. The air guiding slot 8 on the support rib 2 extends along the length direction of the support rib 2 and extends through both ends of the support rod 1 along the length direction. When the battery needs to release gas to release the pressure, the air guiding slot 8 quickly directs the gas to an exterior of the winding core 100 to improve an efficiency of gas and pressure releasing.

In some embodiments, all of the support ribs 2 are arranged on the support rod 1 and are extendable and retractable along a radial direction of the support rod 1, such that a supportive outer diameter of the winding core central pin is adjustable, and the winding core central pin may be applied to various center holes 101 of winding cores 100 having various diameters.

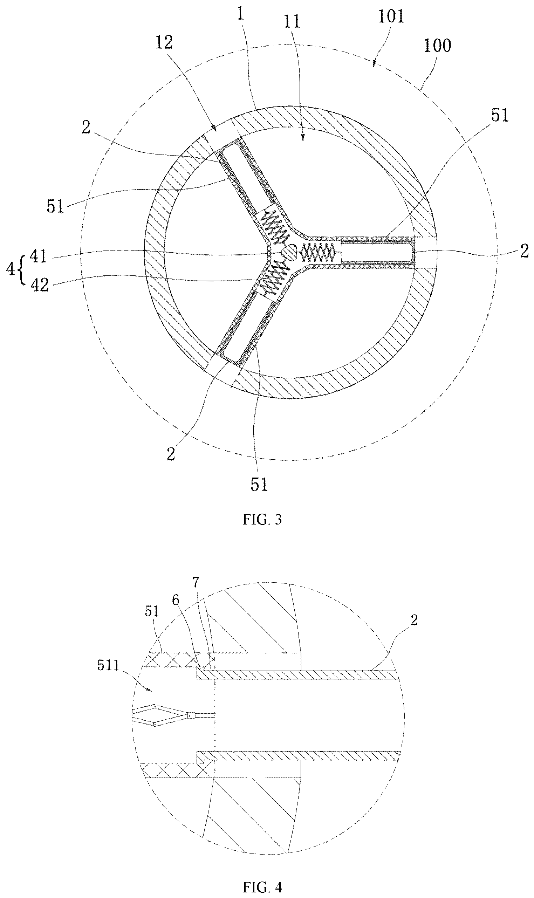

For example, as shown in FIGS. 2 and 3, a mounting cavity 11 is defined inside the support rod 1. The winding core central pin further includes a contraction structure 4. The contraction structure 4 is arranged inside the mounting cavity 11. Specifically, the contraction structure 4 includes a cylindrical connecting rod 41. A center axis of the connecting rod 41 coincides with a center axis of the support rod 1. A plurality of elastic members 42 are arranged along a circumferential direction of the connecting rod 41, and the plurality of elastic members 42 have an equal inclination angle with respect to the circumferential direction of the connecting rod 41. The outer wall of the support rod 1 defines a plurality of openings 12 at positions corresponding to the plurality of support ribs 2. The number of the plurality of elastic members 42, the number of the plurality of openings 12, and the number of the plurality of support ribs 2 are the same to each other. An end of each of the plurality of support ribs 2 is arranged inside the support rod 1 and is connected to a respective one of the plurality of elastic members 42, and the other end of each of the plurality of support ribs 2 extends to an exterior of the support rod 1 through a respective one of the plurality of openings 12. The plurality of elastic members 42 drive the plurality of support ribs 2 to have a tendency to move to abut against the inner wall of the center hole 101 of the winding core 100, such that the support ribs 2 are extendable and retractable to be arranged on the support rod 1.

When the winding core central pin needs to be inserted into the center hole 101 of the winding core 100, the support ribs 2 are compressed to move towards the interior of the mounting cavity 11 to reduce the supportive outer diameter of the winding core central pin, enabling the winding core central pin to be inserted into the center hole 101. After inserting the winding core central pin into the center hole 101, the support ribs 2, under actions of the elastic members 42, automatically move towards the exterior of the support rod 1 to abut against the inner wall of the center hole 101 of the winding core 100. In this way, the winding core central pin is mounted.

Further, a limiting member 5 is arranged in the mounting cavity 11. The limiting member 5 includes a plurality of support portions 51 arranged along the circumferential direction of the support rod 1, and the plurality of support portions 51 have an equal inclination angle with respect to the circumferential direction. The number of the plurality of support portions 51 is the same as the number of the plurality of openings 12. Each of the plurality of support portions 51 defines a limiting through slot 511 communicating with the respective one of the plurality of openings 12. A length of each limiting through slot 511 extends along a moving direction of the respective support rib 2. The support rib 2 is slidably arranged inside the limiting through slot 511. At least portion of the respective elastic member 42 is arranged inside the limiting through slot 511 and is connected to an end of the support rib 2. The elastic member 42 drives the support rib 2 to slide in the limiting through slot, such that the other end of the support rib 2 to slide out of the limiting through hole 9 and extend through the opening 12 to the exterior of the support rod 1. By defining the limiting through slot 511, the elastic member 5 guides the moving direction of the support rib 2 to prevent the support rib 2 from being shifted to be stuck inside the support rod 1, ensuring that the support rib 2 can be extended to the exterior of the support rod 1.

Furthermore, each support portion 51 has a first end and a second end opposite to the first end. The length direction of the limiting through slot 511 is the same as a direction extending from the first end to the second end. The limiting through slot 511 extends through the first end and the second end. First ends of all of the plurality of support portions 51 are connected to each other, and second ends of all of the plurality of support portions 51 are connected to an inner wall of the support rod 1 and the plurality of openings 12 respectively. In this way, the first ends of all the plurality of support portions 51 are connected to each other to cooperatively form an integral and one-piece limiting member 5, enabling the plurality of support portions 51 to interact with each other to support the inner wall of the support rod 1 to improve the strength of the support rod 1. Furthermore, limiting through slots 511 of all the plurality of support portions 51 are communicated with each other in order to form a mounting space inside the limiting member 5. The contraction structure 4 is arranged inside the mounting space and is connected to the support ribs 2.

The center axis of a connection position of the first ends of all the plurality of support portions 51 is the center axis of the limiting member 5. The connecting rod 41 is disposed at the center axis of the limiting member 5. The center axis of the connecting rod 41 coincides with the center axis of the limiting member 5. All the plurality of elastic members 42 are arranged along the circumferential direction of the connecting rod 41 and have an equal inclination angle with respect to the circumferential direction. An end of each elastic member 42 away from the connecting rod 41 extends into the respective limiting through slot 511 and is connected to the respective support rib 2.

In some embodiments, as shown in FIG. 4, a slot wall of the limiting through slot 511 defines a first limiting portion 6 at a position adjacent to the second end. The support rib 2 is arranged with a second limiting portion 7 that is snap-fitted with the first limiting portion 6. For example, the first limiting portion 6 is a first protrusion. The first protrusion protrudes toward a center of the limiting through slot 511. The second limiting portion 7 is a second protrusion. An outer wall of the end of the support rib 2 connected to the elastic member 42 is arranged with the second protrusion. When the support rib 2 moves to an extreme position, the second protrusion abuts against the first protrusion to limit the movement of the support rib 2, preventing the support rib 2 from moving out of the limiting through slot 511.

In an example, the limiting member 5 separates the interior of the support rod 1 into a plurality of circulation spaces. The limiting member 5 defines a flow guiding hole extending through the limiting member 5. All the plurality of circulation spaces are communicated, through the flow guiding hole, to each other. In addition, the avoidance spaces 3 are also communicated, through the plurality of through holes 9, to each other, enabling the electrolyte to circulate in the interior and the exterior of the winding core central pin to soak the winding core 100.

Each of the inner wall and the outer wall of the support rod 1 defines the air guiding slot 8. An outer wall of the limiting member 5 also defines the air guiding slot 8. In this way, an air guiding effect is improved.

A battery is further provided and includes a housing, the cylindrical winding core 100 arranged inside the housing, and the winding core central pin as described in any of the above embodiments. The winding core central pin is inserted in the center hole 101 of the winding core 100. For the battery in the present embodiment, the winding core central pin is arranged to prevent the winding core 100 from collapsing and deformation inwardly and to minimize the influence on the absorption of the electrolyte by the winding core 100. The performance and the service life of the battery are improved.

## Claims

1. A winding core central pin, comprising a support rod and a plurality of support ribs, wherein, the support rod is cylindrical; the plurality of support ribs are arranged along a circumferential direction of an outer wall of the support rod and have an equal inclination angle with respect to the outer wall of the support rod; the plurality of support ribs are configured to abut against an inner wall of a center hole of a winding core; an avoidance space is defined between every two adjacent support ribs of the plurality of support ribs to allow an electrolyte to flow through the avoidance space.

2. The winding core central pin according to claim 1, wherein, all of the plurality of support ribs are arranged on the support rod and are extendable and retractable along a radial direction of the support rod.

3. The winding core central pin according to claim 2, wherein, a mounting cavity is defined inside the support rod, the winding core central pin further comprises a contraction structure; the contraction structure is arranged inside the mounting cavity; and
the contraction structure comprises a cylindrical connecting rod; a plurality of elastic members are arranged along a circumferential direction of the connecting rod, and the plurality of elastic members have an equal inclination angle with respect to the circumferential direction of the connecting rod; the outer wall of the support rod defines a plurality of openings at positions corresponding to the plurality of support ribs; an end of each of the plurality of support ribs is connected to a respective one of the plurality of elastic members, and the other end of each of the plurality of support ribs extends to an exterior of the support rod through a respective one of the plurality of openings; the plurality of elastic members are configured to drive the plurality of support ribs respectively to have a tendency to move to abut against the inner wall of the center hole of the winding core.

4. The winding core central pin according to claim 3, wherein, a limiting member is arranged in the mounting cavity; the limiting member comprises a plurality of support portions arranged along the circumferential direction of the connecting rod, and the plurality of support portions have an equal inclination angle with respect to the circumferential direction; each of the plurality of support portions defines a limiting through slot communicating with the respective one of the plurality of openings; a length of the limiting through slot extends along a moving direction of the respective one of the plurality of support ribs; at least a portion of the respective support rib is slidably arranged inside the limiting through slot.

5. The winding core central pin according to claim 4, wherein, each of the plurality of support portions has a first end and a second end opposite to the first end; the limiting through slot extends through the first end and the second end; first ends of all of the plurality of support portions are connected to each other, enabling the limiting member to form a mounting space therein; second ends of all of the plurality of support portions abut against an inner wall of the support rod and are connected to the plurality of openings respectively; and the contraction structure is arranged inside the mounting space and is connected to the plurality of support ribs.

6. The winding core central pin according to claim 5, wherein, a slot wall of the limiting through slot defines a first limiting portion at a position adjacent to the second end; each of the plurality of support rib is arranged with a second limiting portion that is snap-fitted with the first limiting portion to prevent the respective support rib from moving out of the limiting through slot.

7. The winding core central pin according to any one of claims 1 to 6, wherein, each of the outer wall of the support rod and an outer wall of each support rib defines a plurality of air guiding slots; the plurality of air guiding slots extend along a length direction of the winding core central pin.

8. The winding core central pin according to any one of claims 1 to 6, wherein, the outer wall of the support rod and/or the plurality of support ribs define a plurality of through holes extending through the outer wall of the support rod and/or the plurality of support ribs; all avoidance spaces are communicated, through the plurality of through holes, to each other to allow the electrolyte to flow through.

9. The winding core central pin according to claim 8, wherein, a diameter of each of the plurality of through holes is in a range of 1mm to 3mm.

10. A battery, comprising a housing, a winding core arranged inside the housing, and the winding core central pin according to any one of claims 1 to 9, wherein, the winding core central pin is inserted in the center hole of the winding core.
